(19) Europäisches Patentamt
European Patent Office
Office européen des brevets

(11) EP 3 007 793 B1

(12) **EUROPÄISCHE PATENTSCHRIFT**

(45) Veröffentlichungstag und Bekanntmachung des Hinweises auf die Patenterteilung:
**26.04.2017 Patentblatt 2017/17**

(21) Anmeldenummer: **14728963.1**

(22) Anmeldetag: **06.06.2014**

(51) Int Cl.:
***B01D 19/04*** *(2006.01)* ***C11D 3/37*** *(2006.01)*
***C08G 77/00*** *(2006.01)* ***C08G 77/16*** *(2006.01)*
***C08G 77/388*** *(2006.01)* ***C08L 83/04*** *(2006.01)*
***C08L 83/08*** *(2006.01)*

(86) Internationale Anmeldenummer:
**PCT/EP2014/061836**

(87) Internationale Veröffentlichungsnummer:
**WO 2014/198665 (18.12.2014 Gazette 2014/51)**

(54) **VERFAHREN ZUM ENTSCHÄUMEN VON WÄSSRIGEN, TENSIDE ENTHALTENDEN ZUSAMMENSETZUNGEN, UND ENTSCHÄUMERFORMULIERUNGEN**

PROCESS FOR DEFOAMING AQUEOUS COMPOSITIONS CONTAINING SURFACTANTS, AND DEFOAMING FORMULATIONS

PROCÉDÉ DE DÉMOUSSAGE DE COMPOSITIONS AQUEUSES CONTENANT DES AGENTS TENSIO-ACTIFS, ET FORMULATIONS DE DEMOUSSAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.06.2013 DE 102013210813**

(43) Veröffentlichungstag der Anmeldung:
**20.04.2016 Patentblatt 2016/16**

(73) Patentinhaber: **Wacker Chemie AG**
**81737 München (DE)**

(72) Erfinder:
- **BREHM, Christof**
**84489 Burghausen (DE)**
- **HÖLZLWIMMER, Elisabeth**
**84359 Simbach (DE)**

(74) Vertreter: **Deffner-Lehner, Maria et al**
**Wacker Chemie AG**
**Zentralbereich Patente, Marken und Lizenzen**
**Hanns-Seidel-Platz 4**
**81737 München (DE)**

(56) Entgegenhaltungen:
**WO-A2-2007/060113 DE-A1-102006 044 839**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 007 793 B1

## Beschreibung

Die Erfindung betrifft ein Verfahren zum Entschäumen und/oder zur Verhinderung des Schäumens von wässrigen, Tenside enthaltenden Zusammensetzungen auf der Basis von Siloxanen.

In vielen flüssigen, insbesondere wässrigen Systemen, die als erwünschte oder auch unerwünschte Bestandteile oberflächenaktive Verbindungen enthalten, können durch Schaumbildung Probleme auftreten, wenn diese Systeme in mehr oder weniger intensiven Kontakt mit gasförmigen Stoffen gebracht werden, beispielsweise beim Begasen von Abwässern, beim intensiven Rühren von Flüssigkeiten, bei Destillations-, Wasch- oder Färbeprozessen oder bei Abfüllvorgängen.

Die Bekämpfung dieses Schaums kann auf mechanischem Wege oder durch den Zusatz von Entschäumern erfolgen. Dabei haben sich Entschäumer auf Siloxanbasis besonders bewährt.

Entschäumer auf Basis von Siloxanen werden beispielsweise nach US 3,383,327 A durch Erhitzen von hydrophiler Kieselsäure in Polydimethylsiloxanen hergestellt. Durch Anwendung von basischen Katalysatoren, kann die Wirksamkeit derartiger Entschäumer verbessert werden (US 3,560,401 A).

Neben Polydimethylsiloxanen werden auch Organopolysiloxane vorgeschlagen, welche neben den Methylgruppen auch andere längerkettige aliphatische oder aromatische Kohlenwasserstoffgruppen am Silizium tragen. Häufig will man durch die Einbringung von langen Alkylgruppen die Verträglichkeit mit Mineralölen, welche in Entschäumerzusammensetzungen enthalten sein können, verbessern. Entschäumerformulierungen mit Organopolysiloxanen mit längeren Alkylgruppen oder auch Phenylgruppen zeigen des Weiteren eine gegenüber Entschäumerformulierungen mit Polydimethylsiloxanen verbesserte Entschäumerwirkung. Derartige Entschäumerformulierungen sind beispielsweise in EP 578 424 A2, wobei Organopolysiloxane mit Alkylgruppen mit 9 bis 35 Kohlenstoffatomen eingesetzt werden, in EP 1 075 863 und EP 1 075 864, wobei Organopolysiloxane mit wenigstens einem Si-gebundenem Substituenten der Formel X-Ph (X = zweiwertige Alkylengruppe, Ph = Phenylgruppe) verwendet werden, in US 7,619,043 B2, wobei Organopolysiloxane mit aromatischen Kohlenwasserstoffresten eingesetzt werden, oder in US 2009/0137446 A1 beschrieben.

Die nach dem Stand der Technik hergestellten Entschäumerformulierungen weisen jedoch in stark schäumenden vor allem Aniontensid-reichen Systemen nicht immer eine ausreichende Wirksamkeit auf.
Daher wird versucht durch Kombination gängiger Silicon-Entschäumer mit u.a. auch wachsartigen Nicht-Silicon-Materialien die Entschäumerwirksamkeit zu steigern. So werden in EP 266 863 A1 Alkylphosphorsäure oder deren Salze als Antischaum-Promotoren zugesetzt. In EP 1 118 655 A1 werden ungesättigte Alkohole in Kombination mit Silicon-Antischaummitteln zur Unterstützung der Fähigkeit der Silicon-Antischaummittel beschrieben. In US 7,632,890 B2 wird der Zusatz stärker polarer Komponenten beschrieben, die bevorzugt ein aktives Wasserstoffatom besitzen, z.B. Fettalkohole, ethoxylierte Fettsäuren oder ethoxylierte Alkylphenole oder auch Partialester von Polyolen, wie Monoester von Glycerin und Fettsäuren. Diese werden zusammen mit wachsartigen Additionsverbindungen, die einen unpolaren Polyolester enthalten, mit den Silicon-Entschäumern kombiniert.
Ein Problem der eingesetzten Nicht-Silicon-Materialien ist deren Kompatibilität mit den Silicon-Entschäumern, deren Wirkung verbessert werden soll.

Aus DE 10 2006 044 839 A1 ist ein Verfahren zum Entschäumen von wässrigen, Tenside enthaltenden Medien bekannt durch Zugabe von Entschäumerformulierungen, die Polydiorganosiloxane sowie Polyether- und β-Ketocarbonylgruppen aufweisende Organosiliciumverbindungen enthalten. Letztere Verbindungen werden durch Umsetzung von Polyetheracetoacetat mit Aminogruppen aufweisenden Organosiliciumverbindungen hergestellt.

In WO 2007/060113 A2 ist ein Verfahren zur Herstellung von β-Ketocarbonyl-funktionellen Organosiliciumverbindungen beschrieben, bei dem Diketen mit Aminogruppen aufweisenden Organosiliciumverbindungen umgesetzt werden, wobei Öle erhalten werden.

Es bestand somit die Aufgabe, Entschäumerformulierungen auf der Basis von Siloxanen bereitzustellen, die durch Kombination gängiger Silicon-Entschäumer und einem Wirkungsverstärker erhalten werden, bei denen Probleme der Kompatibilität vermindert sind und welche insbesondere in tensidreichen stark schäumenden Medien eine verbesserte Wirksamkeit zeigen.
Die Aufgabe wird durch die Erfindung gelöst.

Gegenstand der Erfindung ist ein Verfahren zum Entschäumen und/oder zur Verhinderung des Schäumens von wässrigen, Tenside enthaltenden Zusammensetzungen durch Zugabe von Entschäumerformulierungen enthaltend

(A) Polydiorganosiloxane, die Einheiten der Formel enthalten, wobei

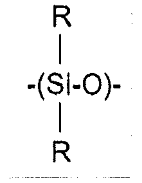 (I)

R gleich oder unterschiedlich sein kann, und ein einwertiger, ggf. substituierter Kohlenwasserstoffrest mit 1 bis 36 Kohlenstoffatomen bedeutet, vorzugsweise eine Alkylgruppe mit 1 bis 36 Kohlenstoffatomen, eine Arylgruppe mit 1 bis 36 Kohlenstoffatomen oder eine Aralkylgruppe mit 1 bis 36 Kohlenstoffatomen ist, und

(B) wachsartige β-Ketocarbonyl-funktionelle Organosiliciumverbindungen, die mindestens einen Si-gebundenen Rest **B** der allgemeinen Formel

$$R^1CH_2\text{-}C(=O)\text{ -}CHR^1\text{-}C(=O)\text{ -}NH[\text{-}L^2\text{-}NZ]_y\text{-}L^1\text{-}(Si) \qquad (II)$$

enthalten, wobei

- $R^1$ einen einwertigen, gegebenenfalls substituierten Kohlenwasserstoffrest mit mindestens 12 C-Atomen, vorzugsweise mit mindestens 14 C-Atome bedeutet,
- Z ein Rest der Formel $R^1CH_2$-C(=O)-$CHR^1$-C(=O)- ist oder einen Rest $R^2$ bedeutet,
- $R^2$ ein Wasserstoffatom oder einen einwertigen Kohlenwasserstoffrest mit 1 bis 18 C-Atomen, vorzugsweise einen $C_1$-$C_4$-Alkylrest, vorzugsweise ein Wasserstoffatom ist,
- $L^1$ ein zweiwertiger Kohlenwasserstoffrest mit 1 bis 18 C-Atomen, ist,
- $L^2$ ein zweiwertiger Kohlenwasserstoffrest mit 1 bis 18 C-Atomen, ist,
- y 0 oder 1 ist und

(Si)- die Bindung zum Si-Atom bedeutet.

Die Viskosität der erfindungsgemäßen Polydiorganosiloxane (A) beträgt vorzugsweise mindestens 50 mPa·s, bevorzugt mindestens 550 mPa·s, und vorzugsweise höchstens 100 000 mPa·s, bevorzugt höchstens 10 000 mPa·s, jeweils bei 25°C und 101,425 kPa.

Als Polydiorganosiloxane (A) werden vorzugsweise solche der allgemeinen Formel

$$R_3SiO(R_2SiO)_dSiR_3 \qquad (I')$$

eingesetzt, wobei

- R die oben dafür angegebene Bedeutung hat,
- d eine ganze Zahl ist und einen solchen Wert hat, dass die Viskosität der Polydiorganosiloxane (A) mindestens 50 mPa·s, bevorzugt mindestens 550 mPa·s, und höchstens 100 000 mPa·s, bevorzugt höchstens 10 000 mPa·s, jeweils bei 25°C und 101,425 kPa, beträgt.

Vorzugsweise ist d eine ganze Zahl von mindestens 30, bevorzugt mindestens 40, besonders bevorzugt von mindestens 50, und vorzugsweise höchstens von 1500, bevorzugt von höchstens 1000 und besonders bevorzugt von höchstens 500.

Es kann eine Art von Polydiorganosiloxan (A) oder ein Gemisch aus mindestens zwei Arten von Polydiorganosiloxanen (A) eingesetzt werden.

Vorzugsweise bedeutet **R** einen einwertigen, von aliphatischen Kohlenstoff-Kohlenstoff-Mehrfachbindungen freien Kohlenwasserstoffrest mit 1 bis 18 Kohlenstoffatomen.

Beispiele für Kohlenwasserstoffreste **R** sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α-und der β-Phenylethylrest sowie der 2-Phenylpropylrest.
Die Kohlenwasserstoffreste R können Ether- oder Polyethergruppen enthalten.

Bevorzugte Beispiele für R sind Methyl-, Ethyl-, Octyl, Dodecyl-, 2-Phenylpropyl- und Phenylreste.

Die erfindungsgemäßen wachsartigen β-Ketocarbonyl-funktionellen Organosiliciumverbindungen (B) können oligomere oder polymere Organosiloxane, vorzugsweise Organopolysiloxane, sein. Sie enthalten vorzugsweise mindestens 3, bevorzugt mindestens 5 und besonders bevorzugt mindestens 10 Si-Atome und vorzugsweise bis zu 2000 Si-Atome, bevorzugt bis zu 1000 Si-Atome und besonders bevorzugt bis zu 700 Si-Atome.

Die erfindungsgemäß eingesetzten wachsartigen β-Ketocarbonylfunktionellen Organosiliciumverbindungen (B) sind bekannt und in US 8,114,950 B2 (incorporated by reference) einschließlich ihrer Herstellung beschrieben.

Gemäß US 8,114,950 B2 haben die β-Ketocarbonyl-funktionellen Organopolysiloxane den Vorteil, dass sie trotz längerkettiger Alkylketten ihren Siliconcharakter weiterhin behalten und dadurch eine hohe Kompatibilität mit Polydiorganosiloxanen aufweisen.

Die wachsartigen β-Ketocarbonyl-funktionellen Organosiliciumverbindungen (B) werden vorzugsweise hergestellt, indem Organosiliciumverbindungen (1) mit mindestens einem Rest A der allgemeinen Formel

$$NH_2[-L^2-NR^2]_y-L^1-(Si) \qquad (III)$$

mit Diketenen (2) der allgemeinen Formel

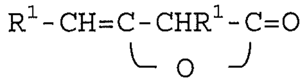

(IV),

umgesetzt werden,
wobei $R^1$, $R^2$, $L^1$, $L^2$, y und (Si)- die oben dafür angegebene Bedeutung haben.

Vorzugsweise weist der Rest $\mathbf{R^1}$ höchstens 18 C-Atome auf. Bevorzugt weist der Rest $\mathbf{R^1}$ 14 bis 16 C-Atome auf, besonders bevorzugt ist er ein $C_{14}$-$C_{16}$-Alkylrest.
Beispiele für Reste $\mathbf{R^1}$ sind der Dodecyl-, Tetradecyl-, Hexadecyl- und der Octadecylrest.

Bevorzugte Beispiele für Reste $\mathbf{R^2}$ sind das Wasserstoffatom und der Methyl- und Ethylrest.

Beispiele für Reste $\mathbf{L^1}$ sind
$-CH_2CH_2-$, $-CH(CH_3)-$, $-CH_2CH_2CH_2-$, $-CH_2C(CH_3)H-$, $-CH_2CH_2CH_2CH_2-$, $-CH_2CH_2CH(CH_3)-$, wobei der $-CH_2CH_2CH_2$-Rest bevorzugt ist.

Beispiele für Reste $\mathbf{L^2}$ sind
$-CH_2CH_2-$, $-CH(CH_3)-$, $-CH_2CH_2CH_2-$, $-CH_2C(CH_3)H-$, $-CH_2CH_2CH_2CH_2-$, $-CH_2CH_2CH(CH_3)-$, wobei der $-CH_2CH_2$-Rest bevorzugt ist.

Beispiele für Reste **A** sind

$$-CH_2CH_2CH_2NH_2,$$

$$-CH_2CH_2CH_2NHCH_3,$$

$$-CH_2CH(CH_3)NH_2,$$

$$-CH_2CH_2CH(CH_3)NH_2$$

und

$$-CH_2CH_2CH_2NHCH_2CH_2NH_2.$$

Als Organosiliciumverbindungen (1) mit mindestens einem Rest **A** können oligomere oder polymere Organosiloxane eingesetzt werden. Sie enthalten vorzugsweise mindestens 3, bevorzugt mindestens 5 und besonders bevorzugt mindestens 10 Si-Atome und vorzugsweise bis zu 2000 Si-Atome, bevorzugt bis zu 1000 Si-Atome und besonders bevorzugt bis zu 700 Si-Atome.

Vorzugsweise werden als Organosiliciumverbindungen (1) Organopolysiloxane bestehend aus Einheiten der allgemeinen Formel

$$A_aR^3_b(OR^4)_cSiO_{\frac{4-(a+b+c)}{2}} \qquad (V)$$

eingesetzt, wobei

A ein Rest der Formel (III) ist,
$R^3$ einen einwertigen, gegebenenfalls substituierten Kohlenwasserstoffrest mit 1 bis 18 C-Atomen je Rest bedeutet,
$R^4$ ein Wasserstoffatom oder einen Alkylrest mit 1 bis 8 C-Atomen bedeutet,
a 0 oder 1
b 0, 1, 2 oder 3 und
c 0 oder 1 ist,

mit der Maßgabe, dass die Summe a+b+c kleiner oder gleich 3 ist und durchschnittlich mindestens ein Rest A je Molekül enthalten ist.

Beispiele für Reste $\mathbf{R^3}$ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Alkenylreste, wie der Vinyl-, 5-Hexenyl-, Cyclohexenyl-, 1-Propenyl-, Allyl-, 3-Butenyl- und 4-Pentenylrest; Alkinylreste, wie der Ethinyl-, Propargyl- und 1-Propinylrest; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der $\alpha$- und der $\beta$-Phenylethylrest sowie der 2-Phenylpropylrest.

Beispiele für Alkylreste $\mathbf{R^4}$ sind der Methyl-, Ethyl-, n-Propyl-, iso-Propyl- und der n-Butylrest.

Bevorzugt als Organosiliciumverbindungen (1) sind Organopolysiloxane der allgemeinen Formeln

$$A_gR^3_{(3-g)}SiO(SiR^3_2O)_lSiR^3_{(3-g)}A_g \qquad (VI),$$

mit der Maßgabe, dass durchschnittlich mindestens ein Rest A je Molekül enthalten ist,
und besonders bevorzugt sind Organopolysiloxane der allgemeinen Formel

$$(R^4O)_hR^3_{(3-h)}SiO(SiR^3_20)_l(SiR^3AO)_kSiR^3_{(3-h)}(OR^4)_h \qquad (VII),$$

wobei

A ein Rest der Formel (III) ist,
$R^3$ und $R^4$ die oben dafür angegebene Bedeutung haben,
g 0 oder 1, vorzugsweise 1,
h 0 oder 1,
l eine ganze Zahl von mindestens 1, bevorzugt von mindestens 10, und von höchstens 2000, bevorzugt von höchstens 700, und
k eine ganze Zahl von mindestens 1 und von höchstens 200, bevorzugt von höchstens 20,

Besonders bevorzugt werden daher lineare Organopolysiloxane mit seitenständigen Aminogruppen **A** eingesetzt.

Die bei der Herstellung der erfindungsgemäßen $\beta$-Ketocarbonylfunktionellen Organosiliciumverbindungen eingesetzten Organosiliciumverbindungen (1) mit mindestens einem Rest **A** weisen vorzugsweise eine Aminzahl von größer als 0,7 mEq/g, bevorzugt von größer als 1,2 mEq/g, auf. Die Bestimmung der Aminzahl erfolgt dabei nach DIN 16945.

Als wachsartige $\beta$-Ketocarbonyl-funktionelle Organosiliciumverbindungen (B) werden daher vorzugsweise Organopolysiloxane der allgemeinen Formel

$$B_aR^3_b(OR^4)_cSiO_{\frac{4-(a+b+c)}{2}} \qquad (VIII)$$

eingesetzt, wobei

B ein Rest der Formel (II) ist und
$R^3$, $R^4$, a, b, und c die oben dafür angegebene Bedeutung haben, mit der Maßgabe, dass die Summe a+b+c kleiner oder gleich 3 ist und durchschnittlich mindestens ein Rest B je Molekül enthalten ist.

Bevorzugt Beispiele für wachsartige β-Ketocarbonyl-funktionelle Organosiliciumverbindungen (B) sind daher Organopolysiloxane der allgemeinen Formel

$$B_gR^3_{(3-g)}SiO(SiR^3_20)_lSiR^3_{(3-g)}B_g \qquad (IX),$$

mit der Maßgabe, dass durchschnittlich mindestens ein Rest B je Molekül enthalten ist,
und Organopolysiloxane der allgemeinen Formel

$$(R^4O)_hR^3_{3-h}SiO(SiR^3_2O)_l(SiR^3BO)_kSiR^3_{3-h}(OR^4)_h \qquad (X),$$

wobei B ein Rest der Formel (II) ist und
$R^3$, $R^4$, g, h, l und k die oben dafür angegebene Bedeutung haben.

Besonders bevorzugt sind β-Ketocarbonyl-funktionelle Organopolysiloxane der allgemeinen Formel

$$(R^4O)_hR^3_{3-h}SiO(SiR^3_2O)_l(SiR^3BO)_kSiR^3_{3-h}(OR^4)_h \qquad (X),$$

wobei B ein Rest der Formel (II) ist und
$R^3$, $R^4$, g, h, l und k die oben dafür angegebene Bedeutung haben.

Besonders bevorzugt werden daher lineare β-Ketocarbonylfunktionelle Organopolysiloxane (B) mit seitenständigen β-Ketocarbonyl-funktionellen Resten **B** eingesetzt.

Gegenstand der Erfindung sind daher Entschäumerformulierungen enthaltend

(A) Polydiorganosiloxane der allgemeinen Formel

$$R_3SiO(R_2SiO)_dSiR_3 \qquad (I'),$$

wobei R und d die oben dafür angegebene Bedeutung haben, und
(B) wachsartige β-Ketocarbonyl-funktionelle Organosiliciumverbindungen der allgemeinen Formel

$$(R^4O)_hR^3_{3-h}SiO(SiR^3_2O)_l(SiR^3BO)_kSiR^3_{3-h}(OR^4)_h \qquad (X),$$

wobei B ein Rest der Formel (II) ist und
$R^3$, $R^4$, h, l und k die oben dafür angegebene Bedeutung haben.

Die bevorzugt eingesetzten wachsartigen β-Ketocarbonylfunktionellen Organosiliciumverbindungen (B) in den Entschäumerformulierungen werden vorzugsweise hergestellt, indem
Organopolysiloxane (1) mit mindestens einem Rest **A** der allgemeinen Formel

$$(R^4O)_hR^3_{(3-h)}SiO(SiR^3_2O)_l(SiR^3AO)_kSiR^3_{(3-h)}(OR^4)_h \qquad (VII),$$

die vorzugsweise eine Aminzahl von größer als 0,7 mEq/g aufweisen,
wobei A ein Rest der Formel (III) ist und
$R^3$, $R^4$, h, l und k die oben dafür angegebene Bedeutung haben, mit Diketenen (2) der allgemeinen Formel

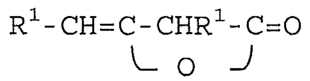

(IV),

umgesetzt werden,
wobei $R^1$ die oben dafür angegebene Bedeutung hat.

In den erfindungsgemäßen wachsartigen β-Ketocarbonylfunktionellen Organosiliciumverbindungen (B) sind die Reste $R^1$ in einer Menge von vorzugsweise mindestens 32 Gew.-%, bevorzugt mindestens 35 Gew.-%, besonders bevorzugt mindestens 40 Gew.-% und vorzugsweise höchstens 60 Gew.-%, jeweils bezogen auf das Gesamtgewicht der wachsartigen β-Ketocarbonyl-funktionellen Organosiliciumverbindungen, enthalten.

Es kann eine Art von ß-Ketocarbonyl-funktionellen Organosiliciumverbindungen (B) oder ein Gemisch aus mindestens zwei Arten von ß-Ketocarbonyl-funktionellen Organosiliciumverbindungen (B) eingesetzt werden.

Die erfindungsgemäßen Entschäumerformulierungen enthalten vorzugsweise zusätzlich zu den Komponenten (A) und (B)

(C) Füllstoffe

(D) Organopolysiloxanharze aus Einheiten der allgemeinen Formel

$$R^5_e(R^6O)_fSiO_{(4-e-f)/2} \qquad (XI),$$

worin

- $R^5$ gleich oder verschieden sein kann und ein Wasserstoffatom oder einen einwertigen, gegebenenfalls substituierten, SiC-gebundenen Kohlenwasserstoffrest mit 1 bis 30 C-Atomen bedeutet,
- $R^6$ gleich oder verschieden sein kann und ein Wasserstoffatom oder einen einwertigen, gegebenenfalls substituierten Kohlenwasserstoffrest mit 1 bis 4 C-Atomen bedeutet,
- e 0, 1, 2 oder 3 ist und
- f 0, 1, 2 oder 3 ist,

mit der Maßgabe, dass die Summe e+f kleiner oder gleich 3 ist und in weniger als 50 % aller Einheiten der Formel (XI) im Organopolysiloxanharz die Summe e+f gleich 2 ist, gegebenenfalls

(E) Polyorganosiloxane, die von Polydiorganosiloxanen (A) verschieden sind, der allgemeinen Formel

$$R^7R^8_2SiO(SiR_2O)_mSiR_2R^7 \quad \text{oder} \quad R^8_2SiO\text{-}(SiR^8_2O)_n\text{-}SiR^8_2O$$

(XIIa) (XIIb)

wobei

- $R^7$ gleich oder verschieden sein kann und $R^8$ oder $-OR^9$ sein kann,
- $R^8$ gleich oder verschieden sein kann und einen einwertigen, gegebenenfalls substituierten Kohlenwasserstoffrest mit 1 bis 18 C-Atomen je Rest bedeutet,
- $R^9$ ein Wasserstoffatom oder einen einwertigen, gegebenenfalls substituierten Kohlenwasserstoffrest mit 1 bis 25 C-Atomen bedeutet,
- m eine ganze Zahl ist, vorzugsweise m so gewählt ist, dass die Polyorganosiloxane der Formel (XIIa) bei 25°C und 101,425 kPa eine Viskosität von 10 bis 1 000 000 mPas haben,
- n eine ganze Zahl ist, vorzugsweise n so gewählt ist, dass die Polyorganosiloxane der Formel (XIIb) bei 25°C und 101,425 kPa eine Viskosität von 2 bis 15 mPas haben,

mit der Maßgabe, dass die Polyorganosiloxane auch geringe Anteile an Verzweigungen, vorzugsweise T-Einheiten ($R^8SiO_{3/2}$) und Q-Einheiten ($SiO_2$), enthalten können, gegebenenfalls

(F) eine wasserunlösliche organische Verbindung gegebenenfalls

(G) polyethermodifizierte Polysiloxane, welche linear oder verzweigt sein können und mindestens eine Polyethergruppe enthalten,

und gegebenenfalls

(H) ein alkalischer oder saurer Katalysator oder dessen Umsetzungsprodukt mit einer Komponente ausgewählt aus der Gruppe der Komponenten (A), (C) bis (G) und deren Mischungen.

Vorzugsweise enthalten die Entschäumerformulierungen auf 100 Gew.-Teile der Summe der Inhaltsstoffe (A), (C), (D), gegebenenfalls (E), gegebenenfalls (F), gegebenenfalls (G) und gegebenenfalls (H) mindestens 0,1 Gew.-Teile, vorzugsweise mindestens 1 Gew.-Teil, bevorzugt mindestens 3 Gew.-Teile, und höchstens 50 Gew.-Teile, bevorzugt höchstens 40 Gew.-Teile, besonders bevorzugt höchstens 30 Gew.-Teile an ß-Ketocarbonyl-funktionellen Organosiliciumverbindungen (B).

Vorzugsweise bedeutet $\mathbf{R^5}$ einen Kohlenwasserstoffrest mit 1 bis 18 Kohlenstoffatomen.

Beispiele für Kohlenwasserstoffreste R gelten im vollen Umfang für Kohlenwasserstoffreste $\mathbf{R^5}$.

Bevorzugte Beispiele für Reste $\mathbf{R^5}$ sind der Methyl-, Ethyl- und Phenylrest.

Beispiele für Reste $\mathbf{R^6}$ sind das Wasserstoffatom und Alkylreste, wie der Methyl-, Ethyl-, n-Propyl-, iso-Propyl- und n-Butylrest.

Bevorzugt ist der Rest $\mathbf{R^6}$ ein Wasserstoffatom oder ein Methyl-oder Ethylrest.

Vorzugsweise bedeutet $\mathbf{R^8}$ einen einwertigen, von aliphatischen Kohlenstoff-Kohlenstoff-Mehrfachbindungen freien Kohlenwasserstoffrest mit 1 bis 18 Kohlenstoffatomen.

Beispiele für Kohlenwasserstoffreste $R^8$ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der $\alpha$-und der $\beta$-Phenylethylrest sowie der 2-Phenylpropylrest.

Beispiele für substituierte Kohlenwasserstoffreste $R^8$ sind Kohlenwasserstoffreste, die Ether- oder Polyethergruppen enthalten.

Bevorzugte Beispiele für $R^8$ sind Methyl-, Ethyl-, Octyl, Dodecyl-, 2-Phenylpropyl- und Phenylreste.

Beispiele für Reste $R^9$ sind das Wasserstoffatom und Alkylreste, wie der Methyl-, Ethyl-, n-Propyl-, iso-Propyl- und n-Butylrest sowie Isotridecyl-, n-Octyl, Stearyl-, 4-Ethyl-hexadecyl-, 2-Octyl-1-dodecyl- oder Eicosanylrest.

Bevorzugt ist der Rest $R^9$ ein Wasserstoffatom oder ein $C_1$-$C_{25}$-Alkylrest, wie ein Methyl-, Ethyl- oder 2-Octyl-1-dodecylrest.

Bevorzugte Beispiele Für Reste $R^7$ sind der Methyl-, Ethyl- und Phenylrest und der Hydroxy-, Methoxy-, Ethoxy- und 2-Octyl-1-dodecyloxyrest.

Derartige Polyorganosiloxane der Formel (XIIa) mit $R^7$ gleich einem Rest **-OR**$^9$ sind beispielsweise durch alkalisch katalysierte Kondensation von silanolterminierten Polydimethylsiloxanen und aliphatischen Alkoholen, wie Isotridecylalkohol, n-Octanol, Stearylalkohol, 4-Ethylhexadecanol, 2-Octyl-1-dodecanol oder Eicosanol, zugänglich.

Vorzugsweise weisen die in den erfindungsgemäßen Entschäumerformulierungen eingesetzten Füllstoffe (C) eine BET-Oberfläche von 20 bis 1000 $m^2/g$ auf. Vorzugsweise weisen die Füllstoffe (2) eine Partikelgröße von weniger als 10 $\mu m$ und eine Agglomeratgröße von weniger als 100 $\mu m$ auf.

Beispiele für Füllstoffe (C) sind Siliciumdioxid (Kieselsäuren), Titandioxid, Aluminiumoxid, Metallseifen, Quarzmehl, PTFE-Pulver, Fettsäureamide z. B. Ethylenbisstearamid, fein verteilte hydrophobe Polyurethane.

Vorzugsweise werden als Füllstoffe (C) Siliciumdioxid (Kieselsäuren), Titandioxid oder Aluminiumoxid mit einer BET-Oberfläche von 20 bis 1000 $m^2/g$ eingesetzt. Vorzugsweise weisen diese Füllstoffe eine Partikelgröße von weniger als 10 $\mu m$ und eine Agglomeratgröße von weniger als 100 $\mu m$ auf.

Bevorzugt als Füllstoffe (C) sind Kieselsäuren, insbesondere solche mit einer BET-Oberfläche von 50 bis 800 $m^2/g$. Diese Kieselsäuren können pyrogene oder gefällte Kieselsäuren sein. Es sind als Füllstoffe (C) sowohl vorbehandelte Kieselsäuren einsetzbar, also hydrophobe Kieselsäuren, als auch hydrophile Kieselsäuren. Beispiele für handelsübliche hydrophobe Kieselsäuren, die erfindungsgemäß eingesetzt werden können, sind HDK® H2000, eine pyrogene mit Hexamethyldisilazanen behandelte Kieselsäure mit einer BET-Oberfläche von 140 $m^2/g$ (käuflich erhältlich bei der Wacker-Chemie GmbH, Deutschland) und eine gefällte mit Polydimethylsiloxan behandelte Kieselsäure mit einer BET-Oberfläche von 90 $m^2/g$ (käuflich erhältlich unter der Bezeichnung "Sipernat D10" bei der Degussa AG, Deutschland).

Hydrophile Kieselsäuren können auch in situ hydrophobiert werden, wenn das für die gewünschte Wirksamkeit der Entschäumerformulierung vorteilhaft ist. Verfahren zur Hydrophobierung von Kieselsäuren sind vielfach bekannt. Die in situ Hydrophobierung der hydrophilen Kieselsäure kann dabei z. B. durch mehrstündiges Erhitzen der in der Komponente (A) oder in einer Mischung aus den Komponenten (A),(D) und gegebenenfalls (E) und gegebenenfalls (F) dispergierten Kieselsäure auf Temperaturen von 100 bis 200°C erfolgen. Dabei kann die Reaktion durch den Zusatz von Katalysatoren, wie KOH, und von Hydrophobiermitteln, wie kurzkettigen OH-terminierten Polydimethylsiloxanen, Silanen oder Silazanen unterstützt werden.

Bei der in den erfindungsgemäßen Entschäumerformulierungen eingesetzten Komponente (D) handelt es sich vorzugsweise um Siliconharze aus Einheiten der Formel (XI), bei denen in weniger als 30%, bevorzugt in weniger als 5%, der Einheiten im Harz die Summe e+f gleich 2 ist.

Bevorzugt handelt es sich bei den Organopolysiloxanharzen aus Einheiten der Formel (XI) um
MQ-Harze aus Einheiten der Formeln

$$SiO_2$$

(Q-Einheiten) und

$$R^5_3SiO_{1/2}$$

(M-Einheiten),
wobei $R^5$ die oben dafür angegebene Bedeutung hat.
Das molare Verhältnis von M- zu Q-Einheiten liegt dabei vorzugsweise im Bereich von 0,5 bis 2,0, bevorzugt im Bereich von 0,6 bis 1,0. Neben den M- und Q-Einheiten können die MQ-Harze gegebenenfalls noch geringe Mengen an $R^5SiO_{3/2}$

(T) - Einheiten oder $R^5{}_2SiO_{2/2}$ (D) - Einheiten, in Mengen von vorzugsweise 0,01 bis 20 Mol%, bevorzugt 0,01 bis 5 Mol %, bezogen auf die Summe aller Siloxaneinheiten, enthalten. Diese Organopolysiloxanharze können außerdem bis zu 10 Gew.-% freie Si-gebundene Hydroxy- oder Alkoxygruppen, wie Methoxy- oder Ethoxygruppen, enthalten.

Vorzugsweise haben diese Organopolysiloxanharze (D) bei 25°C und 101,425 kPa eine Viskosität größer 1000 mPa·s oder sind Feststoffe. Das mit Gelpermeationschromatografie bestimmte gewichtsmittlere Molekulargewicht (bezogen auf einen Polystyrolstandard) dieser Harze beträgt vorzugsweise 200 bis 200 000 g/mol, insbesondere 1000 bis 20 000 g/mol.

Beispiele für in den erfindungsgemäßen Entschäumerformulierungen gegebenenfalls eingesetzten Polyorganosiloxanen (E) sind Polydimethylsiloxane der Formel (XIIa) mit einer Viskosität von 10 bis 1.000.000 mPa·s bzw. cyclische Polydimethylsiloxane der Formel (XIIb) mit einer Viskosität von 2 bis 15 mPa·s, jeweils bei 25°C und und 101,425 kPa.

Obwohl in Formel (XIIa) nicht angegeben, können diese Polyorganosiloxane (E) 0 bis 1 Mol %, vorzugsweise 0 bis 0,02 Mol %, bezogen auf die Summe aller Siloxaneinheiten, andere Siloxaneinheiten, wie $R^8SiO_{3/2}$ (T) - Einheiten oder $SiO_2$ (Q)-Einheiten (wobei $R^8$ die oben dafür angegebene Bedeutung hat) enthalten.

Bei den erfindungsgemäßen Entschäumerformulierungen können wasserunlösliche organische Verbindungen (F) eingesetzt werden. Unter dem Begriff "wasserunlöslich" soll im Sinne der vorliegenden Erfindung eine Löslichkeit in Wasser bei 25°C und einem Druck von 101,425 kPa von maximal 3 Gewichtsprozenten verstanden werden.

Bei der gegebenenfalls eingesetzten Komponente (F) handelt es sich vorzugsweise um wasserunlösliche organische Verbindungen mit einem Siedepunkt größer als 100°C bei dem Druck der umgebenden Atmosphäre, also bei 900 bis 1100 hPa, insbesondere um solche, ausgewählt aus Mineralölen, nativen Ölen, Isoparaffinen, Polyisobutylenen, Rückständen aus der Oxoalkoholsynthese, Estern niedermolekularer synthetischer Carbonsäuren, wie z.B. Pentandiol-1,3-diisobutyrat, Fettsäureestern, wie z.B. Octylstearat, Dodecylpalmitat oder iso-Propylmyristat, Fettalkoholen, Ethern niedermolekularer Alkohole, Phthalaten, Estern der Phosphorsäure und Wachsen.

Bei den erfindungsgemäßen Entschäumerformulierungen können polyethermodifizierte Polysiloxane (G), die linear oder verzweigt sein können und mindestens eine Polyethergruppe tragen, eingesetzt werden. Derartige polyethermodifizierte Polysiloxane sind bekannt und z. B. in EP 1076073 A1, insbesondere Seite 2, Zeile 35 bis Seite 4, Zeile 46, beschrieben (incorporated by reference).

Beispiele für alkalische Katalysatoren (H) sind Alkali- und Erdalkalihydroxide, wie NaOH, KOH, CsOH, LiOH und $Ca(OH)_2$. Beispiele für saure Katalysatoren (H) sind Salzsäure, Schwefelsäure und Phosphornitridchloride.
Bei den Umsetzungsprodukten von (H) mit den Komponenten (A), (C) bis (G) handelt es sich beispielsweise um das Produkt aus der als Füllstoff (C) bevorzugten Kieselsäure mit Alkalihydroxiden, wie z.B. Kaliumsilicat oder Natriumsilicat. Die Dosierung der Katalysatoren kann in typischen organischen Lösemitteln wie Alkoholen (wie z.B. Methanol, Ethanol, Isopropanol) oder Estern (wie z.B. Essigsäureethylester) erfolgen.

Bei den in den erfindungsgemäßen Entschäumerformulierungen eingesetzten Komponenten (C) bis (H) kann es sich jeweils um eine Art einer solchen Komponente wie auch um ein Gemisch aus mindestens zwei Arten einer jeweiligen Komponente handeln.

Das Herstellen der erfindungsgemäßen Entschäumerformulierungen kann zum einen nach bekannten Verfahren, wie durch Mischen aller Komponenten erfolgen, wie z. B. unter Anwendung von hohen Scherkräften in Kolloidmühlen, Dissolvern oder Rotor-Stator-Homogenisatoren. Dabei kann der Mischvorgang bei reduziertem Druck erfolgen, um das Einmischen von Luft, welche z. B. in hochdispersen Füllstoffen enthalten ist, zu verhindern.
Im Anschluss kann bei Bedarf die in situ Hydrophobierung der Füllstoffe erfolgen.
Es ist auch möglich erst die Komponenten (B) vorzulegen und ggf. zu erhitzen und dann sukzessive die Komponenten (A), (C), (D), ggf. (E) und ggf. (F) und ggf. (G) und ggf. (H) zuzugeben. In einer bevorzugten Ausführungsform wird Komponente (D) in gelöster Form als Lösung in Komponente (E) oder Teilen der Komponente (E) oder als Lösung in Komponente (F) oder Teilen der Komponente (F) zugegeben.
In einem bevorzugten Herstellverfahren wird die Komponente (B), ggf. in geschmolzener Form, zu einer zuvor hergestellten Formulierung der Komponenten (A), (C), (D), ggf. (E) und ggf. (F) und ggf. (G) und ggf. (H) hinzugefügt und unter Anwendung von hohen Scherkräften in Kolloidmühlen, Dissolvern oder Rotor-Stator-Homogenisatoren miteinander gemischt. Die zuvor hergestellte Formulierung der Komponenten (A), (C), (D), ggf. (E) und ggf. (F) und ggf. (G) und ggf. (H) kann nach den oben dargestellten Herstellverfahren erhalten werden.

Die erfindungsgemäßen Entschäumerformulierungen können in Form von Emulsionen eingesetzt werden.
Die erfindungsgemäßen Emulsionen enthalten dann vorzugsweise erfindungsgemäße Entschäumerformulierungen,
Emulgatoren und
Wasser.

Falls es sich bei den erfindungsgemäßen Entschäumerformulierungen um Emulsionen handelt, können alle Emulgatoren eingesetzt werden, die dem Fachmann zur Herstellung von Siliconemulsionen bekannt sind, wie z. B. anionische, kationische oder nichtionogene Emulgatoren. Bevorzugt werden Emulgatormischungen eingesetzt, wobei mindestens ein nichtionogener Emulgator, wie z. B. Sorbitanfettsäureester, ethoxylierter Sorbitanfettsäureester, ethoxylierte Fettsäure, ethoxylierter linearer oder verzweigter Alkohol mit 10 bis 20 Kohlenstoffatomen und/oder Glycerinester, enthalten sein sollte. Weiterhin können als Verdicker bekannte Verbindungen, wie Polyacrylsäure, Polyacrylate, Celluloseether wie Carboxymethylcellulose und Hydroxyethylcellulose, Polyurethane, natürliche Verdicker, wie z. B. Xanthan Gum, sowie Konservierungsmittel und andere übliche und dem Fachmann bekannte Zusätze zugesetzt werden.

Die kontinuierliche Phase der erfindungsgemäßen Emulsionen ist bevorzugt Wasser. Es können jedoch auch erfindungsgemäße Entschäumerformulierungen in Form von Emulsionen hergestellt werden, bei denen die kontinuierliche Phase durch die Komponenten (A), (B), (C) und (D) und ggf. (E) und ggf. (F) und ggf (G) und ggf. (H) gebildet werden. Es kann sich dabei auch um multiple Emulsionen handeln.

Verfahren zur Herstellung von Siliconemulsionen sind bekannt. Üblicherweise erfolgt die Herstellung durch einfaches Verrühren aller Bestandteile und ggf. anschließendes Homogenisieren mit Strahldispergatoren, Rotor-Stator-Homogenisatoren, Kolloidmühlen oder Hochdruckhomogenisatoren.

Falls es sich bei der erfindungsgemäßen Entschäumerformulierungen um Emulsionen handelt, sind Öl in Wasser Emulsionen bevorzugt enthaltend
5 bis 50 Gew.-% erfindungsgemäße Entschäumerformulierungen enthaltend Komponenten (A) bis (D) und ggf. (E) und ggf. (F) und ggf. (G) und ggf. (H),
1 bis 20 Gew.-% Emulgatoren und ggf. Verdicker und
30 bis 94 Gew.-% Wasser.

Die erfindungsgemäßen Entschäumerformulierungen können in Form von Pulvern eingesetzt werden und daher auch als frei fließende Pulver formuliert werden. Diese sind z. B. bei der Anwendung in pulverförmigen Waschmitteln bevorzugt. Die Herstellung dieser Pulver ausgehend von den erfindungsgemäßen Entschäumerformulierungen enthaltend Komponenten (A) bis (D) und ggf. (E) und ggf. (F) und ggf. (G) und ggf. (H) erfolgt nach dem Fachmann bekannten Verfahren, wie Sprühtrocknung oder Aufbaugranulation und mit dem Fachmann bekannten Zusätzen.

Die erfindungsgemäßen Pulver enthalten dann vorzugsweise erfindungsgemäße Entschäumerformulierungen und Trägermaterialien.

Die erfindungsgemäßen Pulver enthalten bevorzugt 2 bis 20 Gewichts-% der erfindungsgemäßen Entschäumerformulierungen enthaltend die Komponenten (A) bis (D) und ggf. (E) und ggf. (F) und ggf. (G) und ggf. (H). Als Träger kommen z. B. Zeolithe, Natriumsulfat, Natriumbicarbonat, Natriumcarbonat, Cellulosederivate, Harnstoff (-Derivate) und Zucker zum Einsatz. Die erfindungsgemäßen Pulver enthalten 80 bis 98 Gew.-% Trägermaterialien. Weitere Bestandteile der erfindungsgemäßen Pulver können z. B. organische Wachse sein oder organische Polymere, wie sie z. B. in EP-A 887097 und EP-A 1060778 beschrieben sind.

Die erfindungsgemäßen Entschäumerformulierungen können in Wasch- und Reinigungsmittel enthalten sein. Die erfindungsgemäßen Wasch- und Reinigungsmittel enthalten dann vorzugsweise die erfindungsgemäßen Entschäumerformulierungen oder die erfindungsgemäßen Entschäumerformulierungen in Form von Emulsionen oder in Form von Pulvern.

Die erfindungsgemäßen Entschäumerformulierungen können überall eingesetzt werden, wo Entschäumerformulierungen auf der Basis von Organosiliciumverbindungen auch bisher eingesetzt wurden.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanten bei Raumtemperatur ohne zusätzliche Heizung oder Kühlung einstellt, durchgeführt.
Alle in den Beispielen angeführten Viskositätsangaben sollen sich auf eine Temperatur von 25°C und einem Druck von 101,425 kPa beziehen. Diese werden gemäß DIN EN ISO 3219: 1994 (Polymere/Harze in flüssigem, emulgiertem oder dispergiertem Zustand) und DIN 53019 (Messung von Viskositäten und Fließkurven mit Rotationsviskosimetern) an einem Rotationsrheometer mit Luftlagerung von Anton Paar MCR301 mit Platte-/Kegelsystemen bestimmt.

**Beispiele:**

Prüfungen der Entschäumerwirksamkeit

Test in der Waschmaschine mit einem pulverförmigen Waschmittel Zu 100 g des entschäumerfreien Waschpulvers wurden eine bestimmte Menge (siehe Tabellen 2, 3 und 4) an Entschäumerformulierung gegeben. Das Waschpulver wurde dann gemeinsam mit 3500 g sauberer Baumwollwäsche in eine Trommelwaschmaschine (Typ Miele Novotronik W918 ohne Fuzzy Logic) gegeben. Anschließend wird das Waschprogramm gestartet und die Schaumhöhe über einen Zeitraum von 55 Minuten aufgezeichnet. Aus den über den Gesamtzeitraum ermittelten Schaumnoten (0% kein Schaum messbar bis 100% Überschäumen) wird die durchschnittliche Schaumnote bestimmt. Je niedriger diese ist, desto wirksamer ist die Entschäumerformulierung über den gesamten Zeitraum.

Herstellung der erfindungsgemäßen ß-Ketocarbonyl-funktionellen Organopolysiloxane B1 und B2:

B1: 119 g techn. Alkylketen-Dimer (erhältlich bei der Fa. TRIGON Chemie GmbH), welches aus einem Gemisch aus Palmitin-/Stearinsäure (ca. 30/70) hergestellt wurde, woraus ein Rest $R^1$ von $C_{14}/C_{16}$-Alkyl resultiert, werden bei 50°C aufgeschmolzen. 85 g eines Polysiloxans bestehend aus (3-Aminopropyl)methylsiloxy-, Dimethylsiloxy- und Trimethylsiloxyeinheiten der Viskosität von 123 $mm^2/s$ (25°C) und einer Aminzahl von 1,99 mEquiv./g werden über einen Zeitraum von 30 min derart zudosiert, dass die Temperatur der Reaktionsmischung 75°C nicht überschreitet. Die technische Ware an Alkylketen-Dimer hat einen Diketen-Gehalt von 85%, so dass eine Stöchiometrie Alkylketen-Dimer : Polysiloxan von 1,0:1,0 resultiert. Nach Dosierende wird die Temperatur auf 100°C erhöht und bei dieser Temperatur eine Stunde weiter gerührt. Nach Abkühlen auf Raumtemperatur erhält man ein ß-Ketocarbonyl-funktionelles Organopolysiloxan B1, in dem kein freies Amin mehr nachweisbar ist und das 42,6 Ges.-% $R^1$ Gruppen enthält. Der Schmelzpunkt des Reaktionsprodukts liegt bei 52°C.

B2: 133 g des in Beispiel 1 beschriebenen Alkylketen-Dimers werden in zu Beispiel 1 analoger Art mit einem Polysiloxans bestehend aus (2-Aminoethyl-3-aminopropyl)methylsiloxy-, Dimethylsiloxy- und Trimethylsiloxyeinheiten der Viskosität von 23 $mm^2/s$ (25°C) und einer Aminzahl von 2,33 mEquiv./g umgesetzt. Man erhält ein ß-Ketocarbonyl-funktionelles Organopolysiloxan B2, in dem kein freies Amin mehr nachweisbar ist und das 45,9 Ges.-% $R^1$ Gruppen enthält. Der Schmelzpunkt des Reaktionsprodukts liegt bei 37°C.

Herstellung der Entschäumerformu-lierungen mit den Komponenten (A), (C) bis (H) : A1 bis A4 :

A1: 90 Teile eines Polyorganosiloxans bestehend aus (n-Dodecyl)methylsiloxy- und Trimethylsiloxyeinheiten der Viskosität von 1110 $mm^2/s$ (25°C), 5 Teile einer pyrogenen Kieselsäure mit einer BET-Oberfläche von 300 $m^2/g$, käuflich erhältlich bei der Wacker-Chemie GmbH unter der Bezeichnung HDK® T30, 5 Teile von bei Raumtemperatur festem Siliconharz bestehend aus (nach $^{29}Si$-NMR und IR-Analyse) 40 mol-% $CH_3SiO_{1/2}$-, 50 mol-% $SiO_{4/2}$-, 8 mol-% $C_2H_5OSiO_{3/2}$- und 2 mol-% $HOSiO_{3/2}$-Einheiten mit einer gewichtsmittleren Molmasse von 7900 g/mol (bezogen auf Polystyrolstandard) werden mit einem Dissolver vermischt und in Gegenwart von 1500 ppm KOH (als 20%ige Lösung in Methanol) 4 Stunden auf 150°C erhitzt und nach Abkühlen noch mal mit dem Dissolver homogenisiert. Es wird eine Entschäumerformulierung A1 mit einer Viskosität von 6040 $mm^2/s$ (25°C) erhalten.

Nach analogen Verfahren wurden die folgenden Entschäumerformulierungen hergestellt:

A2: Statt des Polyorganosiloxans aus Beispiel A1 wurde ein Polyorganosiloxan bestehend aus (n-Octyl)methylsiloxy- und Trimethylsiloxyeinheiten der Viskosität von 681 $mm^2/s$ (25°C) verwendet. Es wird eine Entschäumerformulierung A2 mit einer Viskosität von 5600 $mm^2/s$ (25°C) erhalten.

A3: Statt des Polyorganosiloxans aus Beispiel A1 wurde ein Polyorganosiloxan bestehend aus (n-Dodecyl)methylsiloxy-, (1-Phenylethyl)methylsiloxy- und Trimethylsiloxyeinheiten (erstere liegen in einem molaren Verhältnis von 4:1 vor) der Viskosität von 1320 $mm^2/s$ (25°C) verwendet. Es wird eine Entschäumerformulierung A3 mit einer Viskosität von 8900 $mm^2/s$ (25°C) erhalten.

A4: Statt des Polyorganosiloxans aus Beispiel A1 wurde ein Polyorganosiloxan bestehend aus Dimethylsiloxy- und Trimethylsiloxyeinheiten der Viskosität von 8000 $mm^2/s$ (25°C) verwendet. Es wird eine Entschäumerformulierung A4 mit einer Viskosität von 28.800 $mm^2/s$ (25°C) erhalten.

Herstellung der erfindungsgemäßen Entschäumerformulierungen EF1 bis EF8:

EF1: 10 g Entschäumerformulierung A1 werden auf 60°C erhitzt und 2 g aufgeschmolzenes ß-Ketocarbonyl-funktionelles Organopolysiloxan B1 wird hinzugefügt. Die Mischung wird mit einem Dissolver vermischt. Nach Abkühlen entsteht eine weißlich pastöse aber noch fließfähige Entschäumerformulierung EF1.

Nach analogem Verfahren wurden die Entschäumerformulierungen EF2 bis EF8 wie in folgender Tabelle 1 gezeigt hergestellt:

Tabelle 1:

| Beispiel | Entschäumerformulierung | | ß-Ketocarbonyl-funktionelles Organopolysiloxan | | Aussehen |
|---|---|---|---|---|---|
| | Art | Menge | Art | Menge | |
| EF1 | A1 | 10 g | B1 | 2 g | weißlich pastös |

(fortgesetzt)

| Beispiel | Entschäumerformulierung | | ß-Ketocarbonyl-funktionelles Organopolysiloxan | | Aussehen |
|---|---|---|---|---|---|
| | Art | Menge | Art | Menge | |
| EF2 | A1 | 10 g | B2 | 2 g | gelblich pastös |
| EF3 | A2 | 10 g | B1 | 2 g | beige pastös |
| EF4 | A2 | 10 g | B2 | 2 g | gelblich pastös |
| EF5 | A3 | 10 g | B1 | 2 g | weißlich pastös |
| EF6 | A3 | 10 g | B2 | 2 g | gelblich pastös |
| EF7 | A4 | 10 g | B1 | 1,25 g | weißlich pastös |
| EF8 | A4 | 10 g | B2 | 1,25 g | gelblich pastös |

Die Entschäumerformulierungen A1, A3 sowie EF1, EF2, EF5 und EF6 wurden mit einer Dosierung von 0,05 g pro 100 g Waschpulver hinsichtlich ihrer Entschäumerleistung in der Waschmaschine überprüft. Die Ergebnisse dieser Tests sind in Tabelle 2 zusammengefasst.

Tabelle 2:

| Entschäumerformulierung | durchschnittliche Schaumnote | Entschäumerformulierung | durchschnittliche Schaumnote |
|---|---|---|---|
| A1 | 81% | A3 | 76% |
| EF1 | 46% | EF5 | 33% |
| EF2 | 48% | EF6 | 53% |

Die Entschäumerformulierungen A4 sowie EF7 und EF8 wurden mit einer Dosierung von 0,2 g pro 100 g Waschpulver hinsichtlich ihrer Entschäumerleistung in der Waschmaschine überprüft. Die Ergebnisse dieser Tests sind in Tabelle 3 zusammengefasst.

Tabelle 3:

| Entschäumerformulierung | Durchschnittliche Schaumnote |
|---|---|
| A4 | 30% |
| EF7 | 18% |
| EF8 | 3% |

Tabellen 2 und 3 zeigen deutlich, dass die Entschäumerwirksamkeit der Entschäumerformulierungen A1, A3 und A4 durch Kombination mit ß-Ketocarbonyl-funktionellen Organopolysiloxanen deutlich gesteigert kann.

Die Entschäumerformulierungen A2 und EF3 wurden mit unterschiedlichen Dosierungen pro 100 g Waschpulver hinsichtlich ihrer Entschäumerleistung in der Waschmaschine überprüft. Die Ergebnisse dieser Tests sind in Tabelle 4 zusammengefasst.

Tabelle 4:

| Entschäumerformulierung | Dosierung pro 100 g Waschpulver | durchschnittliche Schaumnote |
|---|---|---|
| A2 | 0,05 g | 11% |
| EF3 | 0,1 g | 0 % |
| EF3 | 0,05 g | 9% |
| EF3 | 0,025 g | 6% |

Tabelle 4 zeigt deutlich, dass Entschäumerformulierung EF3 als Kombination von Entschäumerformulierung A2 mit ß-Ketocarbonylfunktionellem Organopolysiloxan B1 bei deutlich geringerer Dosierung die gleiche Entschäumerleistung zeigt als Entschäumerformulierung A2 allein.

**Patentansprüche**

1. Verfahren zum Entschäumen und/oder zur Verhinderung des Schäumens von wässrigen, Tenside enthaltende Zusammensetzungen durch Zugabe von Entschäumerformulierungen enthaltend

(A) Polydiorganosiloxane, die Einheiten der Formel

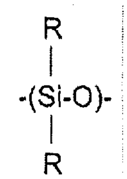

(I)

enthalten, wobei

R gleich oder unterschiedlich sein kann, und ein einwertiger, ggf. substituierter Kohlenwasserstoffrest mit 1 bis 36 Kohlenstoffatomen bedeutet, vorzugsweise eine Alkylgruppe mit 1 bis 36 Kohlenstoffatomen, eine Arylgruppe mit 1 bis 36 Kohlenstoffatomen oder eine Aralkylgruppe mit 1 bis 36 Kohlenstoffatomen ist,

(B) wachsartige β-Ketocarbonyl-funktionelle Organosiliciumverbindungen, die mindestens einen Si-gebundenen Rest B der allgemeinen Formel

$$R^1CH_2\text{-}C(=O)\text{-}CHR^1\text{-}C(=O)\text{-}NH[\text{-}L^2\text{-}NZ]_y\text{-}L^1\text{-}(Si) \qquad (II)$$

enthalten, wobei

$R^1$ einen einwertigen, gegebenenfalls substituierten Kohlenwasserstoffrest mit mindestens 12 C-Atomen, vorzugsweise mit mindestens 14 C-Atome bedeutet,
Z ein Rest der Formel $R^1CH_2\text{-}C(=O)\text{-}CHR^1\text{-}C(=O)\text{-}$ ist oder einen Rest $R^2$ bedeutet,
$R^2$ ein Wasserstoffatom oder einen einwertigen Kohlenwasserstoffrest mit 1 bis 18 C-Atomen, vorzugsweise einen $C_1$-$C_4$-Alkylrest, vorzugsweise ein Wasserstoffatom ist,
$L^1$ ein zweiwertiger Kohlenwasserstoffrest mit 1 bis 18 C-Atomen, ist,
$L^2$ ein zweiwertiger Kohlenwasserstoffrest mit 1 bis 18 C-Atomen, ist,
y 0 oder 1 ist und

(Si)- die Bindung zum Si-Atom bedeutet.

2. Verfahren nach Anspruch 1, **dadurch gekennzeichnet, dass** die Polydiorganosiloxane (A) solche der allgemeinen Formel

$$R_3SiO(R_2SiO)_dSiR_3 \qquad (I')$$

sind, wobei R die in Anspruch 1 dafür angegebene Bedeutung hat,

d eine ganze Zahl ist und einen solchen Wert hat, dass die Viskosität der Polydiorganosiloxane (A) mindestens 50 mPa·s, bevorzugt mindestens 550 mPa·s, und höchstens 100 000 mPa·s, bevorzugt höchstens 10 000 mPa·s, jeweils bei 25°C und 101,425 kPa, beträgt.

3. Verfahren nach Anspruch 1 oder 2, **dadurch gekennzeichnet, dass** die wachsartigen β-Ketocarbonyl-funktionellen Organosiliciumverbindungen (B) Organopolysiloxane der allgemeinen Formel

$$(R^4O)_hR^3_{3-h}SiO(SiR^3_2O)_l(SiR^3BO)_kSiR^3_{3-h}(OR^4)_h \qquad (X),$$

sind, wobei

B der in Anspruch 1 angegebene Rest der Formel (II) ist,
$R^3$ gleich oder verschieden ist und einen einwertigen Kohlenwasserstoffrest mit 1 bis 18 C-Atomen je Rest bedeutet,
$R^4$ gleich oder verschieden ist und ein Wasserstoffatom oder einen Alkylrest mit 1 bis 8 C-Atomen je Rest bedeutet,
h 0 oder 1, vorzugsweise 1,
l eine ganze Zahl von mindestens 1 und von höchstens 2000 und
k eine ganze Zahl von mindestens 1 und von höchstens 200 ist.

**4.** Verfahren nach Anspruch 1, 2 oder 3, **dadurch gekennzeichnet, dass** in den wachsartigen β-Ketocarbonylfunktionellen Organosiliciumverbindungen Reste $R^1$ in einer Menge von mindestens 32 Gew.-%, vorzugsweise mindestens 35 Gew.-%, besonders bevorzugt mindestens 40 Gew.-%, und vorzugsweise höchstens 60 Gew.-%, jeweils bezogen auf das Gesamtgewicht der wachsartigen β-Ketocarbonyl-funktionellen Organosiliciumverbindungen, enthalten sind.

**5.** Verfahren nach einem der Ansprüche 1 bis 4, **dadurch gekennzeichnet, dass** die Entschäumerformulierungen zusätzlich zu den Komponenten (A) und (B) enthalten

(C) Füllstoffe
(D) Organopolysiloxanharze aus Einheiten der allgemeinen Formel

$$R^5_e(R^6O)_fSiO_{(4-e-f)/2} \qquad (XI),$$

worin

$R^5$ gleich oder verschieden sein kann und ein Wasserstoffatom oder einen einwertigen, gegebenenfalls substituierten, SiC-gebundenen Kohlenwasserstoffrest mit 1 bis 30 C-Atomen bedeutet,
$R^6$ gleich oder verschieden sein kann und ein Wasserstoffatom oder einen einwertigen, gegebenenfalls substituierten Kohlenwasserstoffrest mit 1 bis 4 C-Atomen bedeutet,
e 0, 1, 2 oder 3 ist und
f 0, 1, 2 oder 3 ist,

mit der Maßgabe, dass die Summe e+f kleiner oder gleich 3 ist und in weniger als 50 % aller Einheiten der Formel (XI) im Organopolysiloxanharz die Summe e+f gleich 2 ist,
gegebenenfalls
(E) Polyorganosiloxane, die von Polydiorganosiloxanen (A) verschieden sind, der allgemeinen Formel

$$R^7R^8_2SiO(SiR_2O)_mSiR_2R^7$$

(XIIa)

oder

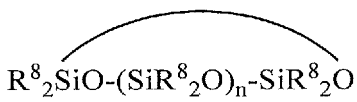

(XIIb)

wobei

$R^7$ gleich oder verschieden sein kann und $R^8$ oder $-OR^9$ sein kann,
$R^8$ gleich oder verschieden sein kann und einen einwertigen gegebenenfalls substituierten Kohlenwasserstoffrest mit 1 bis 18 C-Atomen je Rest bedeutet,
$R^9$ ein Wasserstoffatom oder einen einwertigen, gegebenenfalls substituierten Kohlenwasserstoffrest mit 1 bis 25 C-Atomen bedeutet,
m eine ganze Zahl ist, vorzugsweise m so gewählt ist, dass die Polyorganosiloxane der Formel (XIIa) bei 25°C und 101,425 kPa eine Viskosität von 10 bis 1 000 000 mPas haben,
n eine ganze Zahl ist, vorzugsweise n so gewählt ist, dass die Polyorganosiloxane der Formel (XIIb) bei 25°C und 101,425 kPa eine Viskosität von 2 bis 15 mPas haben,

mit der Maßgabe, dass die Polyorganosiloxane der Formel (XIIa) auch geringe Anteile an Verzweigungen, vorzugsweise T-Einheiten ($R^8SiO_{3/2}$) und Q-Einheiten ($SiO_2$), enthalten können,
gegebenenfalls
(F) eine wasserunlösliche organische Verbindung, gegebenenfalls
(G) polyethermodifizierte Polysiloxane, welche linear oder verzweigt sein können und mindestens eine Polyethergruppe enthalten,
und gegebenenfalls
(H) ein alkalischer oder saurer Katalysator oder dessen Umsetzungsprodukt mit einer Komponente ausgewählt aus der Gruppe der Komponenten (A), (C) bis (G) und deren Mischungen.

6. Verfahren nach einem der Ansprüche 1 bis 5, **dadurch gekennzeichnet, dass** die Entschäumerformulierungen in Form von Emulsionen eingesetzt werden, wobei die Emulsionen Entschäumerformulierungen nach einem der Ansprüche 1 bis 5, Emulgatoren und Wasser enthalten, oder in Form von Pulvern eingesetzt werden, wobei die Pulver Entschäumerformulierungen nach einem der Ansprüche 1 bis 5 und Trägermaterialien enthalten.

7. Verfahren nach einem der Ansprüche 1 bis 6, **dadurch gekennzeichnet, dass** die Entschäumerformulierungen in Wasch- und Reinigungsmittel enthalten sind.

8. Entschäumerformulierungen enthaltend

(A) Polydiorganosiloxane der allgemeinen Formel

$$R_3SiO(R_2SiO)_dSiR_3 \qquad (I'),$$

wobei

R die im Anspruch 1 dafür angegebene Bedeutung hat und
d die im Anspruch 2 dafür angegebene Bedeutung hat, und

(B) wachsartige β-Ketocarbonyl-funktionelle Organosiliciumverbindungen der allgemeinen Formel

$$(R^4O)_hR^3_{3-h}SiO(SiR^3_2O)_l(SiR^3BO)_kSiR^3_{3-h}(OR^4)_h \qquad (X),$$

wobei B ein Rest der allgemeinen Formel

$$R^1CH_2\text{-}C(=O)\text{-}CHR^1\text{-}C(=O)\text{-}NH[\text{-}L^2\text{-}NZ]_y\text{-}L^1\text{-}(Si) \qquad (II)$$

ist, wobei

$R^1$, Z, $R^2$, $L^1$, $L^2$ und y die in Anspruch 1 dafür angegebene Bedeutung haben,
(Si)- die Bindung zum Si-Atom bedeutet und
$R^3$, $R^4$, h, l und k die in Anspruch 3 dafür angegebene Bedeutung haben.

9. Entschäumerformulierungen nach Anspruch 8, **dadurch gekennzeichnet, dass** in den wachsartigen β-Ketocarbonylfunktionellen Organosiliciumverbindungen Reste $R^1$ in einer Menge von mindestens 32 Gew.-%, vorzugsweise mindestens 35 Gew.-%, besonders bevorzugt mindestens 40 Gew.-% und vorzugsweise höchstens 60 Gew.-%, jeweils bezogen auf das Gesamtgewicht der wachsartigen β-Ketocarbonyl-funktionellen Organosiliciumverbindungen, enthalten sind.

10. Entschäumerformulierungen nach Anspruch 8 oder 9, **dadurch gekennzeichnet, dass** sie zusätzlich zu den Komponenten (A) und (B) enthalten

(C) Füllstoffe
(D) Organopolysiloxanharze aus Einheiten der allgemeinen Formel (XI) gemäß Anspruch 5,
gegebenenfalls
(E) Polyorganosiloxane, die von Polydiorganosiloxanen (A) verschieden sind, der allgemeinen Formel (XIIa) und (XIIb) gemäß Anspruch 5,
gegebenenfalls

(F) eine wasserunlösliche organische Verbindung,
gegebenenfalls
(G) polyethermodifizierte Polysiloxane, welche linear oder verzweigt sein können und mindestens eine Polyethergruppe enthalten,
und gegebenenfalls
(H) ein alkalischer oder saurer Katalysator oder dessen Umsetzungsprodukt mit einer Komponente ausgewählt aus der Gruppe der Komponenten (A), (C) bis (G) und deren Mischungen.

**11.** Wasch- und Reinigungsmittel enthaltend Entschäumerformulierungen nach Anspruch 8, 9 oder 10.

**Claims**

**1.** Method for defoaming and/or for preventing the foaming of aqueous compositions comprising surfactants, by addition of defoamer formulations comprising

(A) polydiorganosiloxanes which comprise units of the formula

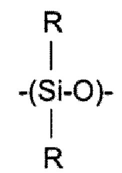 (I)

where

R may be identical or different and is a monovalent, optionally substituted hydrocarbon radical having 1 to 36 carbon atoms, preferably an alkyl group having 1 to 36 carbon atoms, an aryl group having 1 to 36 carbon atoms, or an aralkyl group having 1 to 36 carbon atoms,

(B) waxlike, β-ketocarbonyl-functional organosilicon compounds which comprise at least one Si-bonded radical **B** of the general formula

$$R^1CH_2\text{-}C(=O)\text{-}CHR^1\text{-}C(=O)\text{-}NH[\text{-}L^2\text{-}NZ]_y\text{-}L^1\text{-}(Si) \qquad (II)$$

where

$R^1$ is a monovalent, optionally substituted hydrocarbon radical having at least 12 C atoms, preferably having at least 14 C atoms,
Z is a radical of the formula $R^1CH_2\text{-}C(=O)\text{-}CHR^1\text{-}C(=O)$ - or is a radical $R^2$,
$R^2$ is a hydrogen atom or a monovalent hydrocarbon radical having 1 to 18 C atoms, preferably a $C_1$-$C_4$-alkyl radical, preferably a hydrogen atom,
$L^1$ is a divalent hydrocarbon radical having 1 to 18 C atoms,
$L^2$ is a divalent hydrocarbon radical having 1 to 18 C atoms,
y is 0 or 1, and

(Si)- is the bond to the Si atom.

**2.** Method according to Claim 1, **characterized in that** the polydiorganosiloxanes (A) are of the general formula

$$R_3SiO(R_2SiO)_dSiR_3 \qquad (I')$$

where R has the definition specified for it in claim 1 and

d is an integer and has a value such that the viscosity of the polydiorganosiloxanes (A) is at least 50 mPa·s, preferably at least 550 mPa·s, and not more than 100 000 mPa·s, preferably not more than 10 000 mPa·s, in each case at 25°C and 101.425 kPa.

**3.** Method according to Claim 1 or 2, **characterized in that** the waxlike, β-ketocarbonyl-functional organosilicon compounds (B) are organopolysiloxanes of the general formula

$$(R^4O)_hR^3_{3-h}SiO(SiR^3_2O)_l(SiR^3BO)_kSiR^3_{3-h}(OR^4)_h \qquad (X),$$

where

B is the radical of the formula (II) specified in claim 1,
$R^3$ is identical or different and is a monovalent hydrocarbon radical having 1 to 18 C atoms per radical,
$R^4$ is identical or different and is a hydrogen atom or an alkyl radical having 1 to 8 C atoms per radical,
h is 0 or 1, preferably 1,
l is an integer which is at least 1 and not more than 2000, and
k is an integer which is at least 1 and not more than 200.

**4.** Method according to Claims 1, 2 or 3, **characterized in that** in the waxlike, β-ketocarbonyl-functional organosilicon compounds, radicals $R^1$ are present in an amount of at least 32 wt%, preferably at least 35 wt%, more preferably at least 40 wt%, and preferably not more than 60 wt%, based in each case on the total weight of the waxlike, β-ketocarbonyl-functional organosilicon compounds.

**5.** Method according to any of Claims 1 to 4, **characterized in that** further to components (A) and (B), the defoamer formulations comprise

(C) fillers,
(D) organopolysiloxane resins composed of units of the general formula

$$R^5_e(R^6O)_fSiO_{(4-e-f)/2} \qquad (XI),$$

in which

$R^5$ may be identical or different and is a hydrogen atom or a monovalent, optionally substituted, SiC-bonded hydrocarbon radical having 1 to 30 C atoms,
$R^6$ may be identical or different and is a hydrogen atom or a monovalent, optionally substituted hydrocarbon radical having 1 to 4 C atoms,
e is 0, 1, 2 or 3, and
f is 0, 1, 2 or 3,

with the proviso that the sum e+f is less than or equal to 3 and in less than 50% of all units of the formula (XI) in the organopolysiloxane resin, the sum e+f is 2,
optionally
(E) polyorganosiloxanes, different from polydiorganosiloxanes (A), of the general formula

$$R^7R^8_2SiO(SiR_2O)_mSiR_2R^7 \quad (XIIa) \qquad \text{or} \qquad \overbrace{R^8_2SiO\text{-}(SiR^8_2O)_n\text{-}SiR^8_2O} \quad (XIIb)$$

where

$R^7$ may be identical or different and may be $R^8$ or $-OR^9$,
$R^8$ may be identical or different and is a monovalent, optionally substituted hydrocarbon radical having 1 to 18 C atoms per radical,
$R^9$ is a hydrogen atom or a monovalent, optionally substituted hydrocarbon radical having 1 to 25 C atoms,
m is an integer, m preferably being selected such that the polyorganosiloxanes of the formula (XIIa) have a viscosity at 25°C and 101.425 kPa of 10 to 1 000 000 mPas,
n is an integer, n preferably being selected such that the polyorganosiloxanes of the formula (XIIb) have a viscosity at 25°C and 101.425 kPa of 2 to 15 mPas,

with the proviso that the polyorganosiloxanes of the formula (XIIa) may also include small fractions of branching instances, preferably T units ($R^8SiO_{3/2}$) and Q units ($SiO_2$), optionally
(F) a water-insoluble organic compound, optionally
(G) polyether-modified polysiloxanes, which may be linear or branched and which comprise at least one polyether group,
and optionally
(H) an alkaline or acidic catalyst or reaction product thereof with a component selected from the group of components (A), (C) to (G), and mixtures thereof.

**6.** Method according to any of Claims 1 to 5, **characterized in that** the defoamer formulations are used in the form of emulsions, the emulsions comprising defoamer formulations according to any of Claims 1 to 5, emulsifiers, and water, or are used in the form of powders, the powders comprising defoamer formulations according to any of Claims 1 to 5 and carrier materials.

**7.** Method according to any of Claims 1 to 6, **characterized in that** the defoamer formulations are comprised in detergents and cleaning compositions.

**8.** Defoamer formulations comprising

(A) polydiorganosiloxanes of the general formula

$$R_3SiO(R_2SiO)_dSiR_3 \qquad (I')$$

comprise, where

R has the definition specified for it in Claim 1, and
d has the definition specified for it in Claim 2, and

(B) waxlike, β-ketocarbonyl-functional organosilicon compounds of the general formula

$$(R^4O)_hR^3_{3-h}SiO(SiR^3_2O)_l(SiR^3BO)_kSiR^3_{3-h}(OR^4)_h \qquad (X),$$

where B is a radical of the general formula

$$R^1CH_2\text{-}C(=O)\text{-}CHR^1\text{-}C(=O)\text{-}NH[\text{-}L^2\text{-}NZ]_y\text{-}L^1\text{-}(Si) \qquad (II)$$

where

$R^1$, Z, $R^2$, $L^1$, $L^2$ and y have the definitions specified for them in claim 1,
(Si)- is the bond to the Si atom, and
$R^3$, $R^4$,h, l and k have the definitions specified for them in claim 3.

**9.** Defoamer formulations according to Claim 8, **characterized in that** in the waxlike, β-ketocarbonyl-functional organosilicon compounds, radicals $R^1$ are present in an amount of at least 32 wt%, preferably at least 35 wt%, more preferably at least 40 wt%, and preferably not more than 60 wt%, based in each case on the total weight of the waxlike, β-ketocarbonyl-functional organosilicon compounds.

**10.** Defoamer formulations according to Claim 8 or 9, **characterized in that** further to components (A) and (B) they comprise

(C) fillers,
(D) organopolysiloxane resins composed of units of the general formula (XI) according to Claim 5, optionally
(E) polyorganosiloxanes, different from polydiorganosiloxanes (A) of the general formula (XIIa) and (XIIb) according to Claim 5, optionally
(F) a water-insoluble organic compound, optionally
(G) polyether-modified polysiloxanes, which may be linear or branched and which comprise at least one polyether group,
and optionally

(H) an alkaline or acidic catalyst or reaction product thereof with a component selected from the group of components (A), (C) to (G), and mixtures thereof.

**11.** Detergents and cleaning compositions comprising defoamer formulations according to Claim 8, 9 or 10.

**Revendications**

**1.** Procédé de démoussage et/ou d'inhibition du moussage de compositions aqueuses contenant des tensioactifs par ajout de formulations antimousses contenant :

(A) des polydiorganosiloxanes, qui contiennent des unités de formule

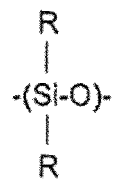

(I)

dans laquelle
les R peuvent être identiques ou différents, et signifient un radical hydrocarboné monovalent, éventuellement substitué, de 1 à 36 atomes de carbone, de préférence un groupe alkyle de 1 à 36 atomes de carbone, un groupe aryle de 1 à 36 atomes de carbone ou un groupe aralkyle de 1 à 36 atomes de carbone,
(B) des composés d'organosilicium à fonction β-cétocarbonyle cireux, qui contiennent au moins un radical B relié à Si de formule générale

$$R^1CH_2\text{-}C(=O)\text{-}CHR^1\text{-}C(=O)\text{-}NH[\text{-}L^2\text{-}NZ]y\text{-}L^1\text{-}(Si) \quad (II)$$

dans laquelle

$R^1$ signifie un radical hydrocarboné monovalent, éventuellement substitué, contenant au moins 12 atomes C, de préférence contenant au moins 14 atomes C,
Z signifie un radical de formule $R^1CH_2\text{-}C(=O)\text{-}CHR^1\text{-}C(=O)\text{-}$ ou un radical $R^2$,
$R^2$ signifie un atome d'hydrogène ou un radical hydrocarboné monovalent de 1 à 18 atomes C, de préférence un radical alkyle en $C_1$-$C_4$, de préférence un atome d'hydrogène,
$L^1$ signifie un radical hydrocarboné bivalent de 1 à 18 atomes C,
$L^2$ signifie un radical hydrocarboné bivalent de 1 à 18 atomes C,
y signifie 0 ou 1, et
(Si)- signifie la liaison à l'atome Si.

**2.** Procédé selon la revendication 1, **caractérisé en ce que** les polydiorganosiloxanes (A) sont de formule générale

$$R_3SiO(R_2Si)_dSiR_3 \quad (I')$$

dans laquelle R a la signification indiquée dans la revendication 1,
d signifie un nombre entier et a une valeur telle que la viscosité des polydiorganosiloxanes (A) soit d'au moins 50 mPa·s, de préférence d'au moins 550 mPa·s, et d'au plus 100 000 mPa·s, de préférence d'au plus 10 000 mPa·s, à chaque fois à 25 °C et 101,425 kPa.

**3.** Procédé selon la revendication 1 ou 2, **caractérisé en ce que** les composés d'organosilicium à fonction β-cétocarbonyle cireux (B) sont des organopolysiloxanes de formule générale

$$(R^4O)_hR^3_{3-h}SiO(SiR^3_2O)_l(SiR^3BO)_kSiR^3_{3-h}(OR^4)_h \quad (X),$$

dans laquelle

B est le radical de formule (II) indiqué dans la revendication 1,
les $R^3$ sont identiques ou différents, et signifient un radical hydrocarboné monovalent de 1 à 18 atomes C par radical,
les $R^4$ sont identiques ou différents, et signifient un atome d'hydrogène ou un radical alkyle de 1 à 8 atomes C par radical,
h signifie 0 ou 1, de préférence 1,
l signifie un nombre entier d'au moins 1 et d'au plus 2 000, et
k signifie un nombre entier d'au moins 1 et d'au plus 200.

**4.** Procédé selon la revendication 1, 2 ou 3, **caractérisé en ce que** les radicaux $R^1$ sont contenus dans les composés d'organosilicium à fonction β-cétocarbonyle cireux en une quantité d'au moins 32 % en poids, de préférence d'au moins 35 % en poids, de manière particulièrement préférée d'au moins 40 % en poids, et de préférence d'au plus 60 % en poids, à chaque fois par rapport au poids total des composés d'organosilicium à fonction β-cétocarbonyle cireux.

**5.** Procédé selon l'une quelconque des revendications 1 à 4, **caractérisé en ce que** les formulations antimousses contiennent en plus des composants (A) et (B),

(C) des charges,
(D) des résines d'organopolysiloxane constituées d'unités de formule générale

$$R^5_e(R^6O)_fSiO_{(4-e-f)/2} \qquad (XI),$$

dans laquelle

les $R^5$ peuvent être identiques ou différents, et signifient un atome d'hydrogène ou un radical hydrocarboné de 1 à 30 atomes C relié à SiC, monovalent, éventuellement substitué,
les $R^6$ peuvent être identiques ou différents, et signifient un atome d'hydrogène ou un radical hydrocarboné de 1 à 4 atomes C, monovalent, éventuellement substitué,
e signifie 0, 1, 2 ou 3, et
f signifie 0, 1, 2 ou 3,
à condition que la somme e+f soit inférieure ou égale à 3, et que la somme e+f soit égale à 2 dans moins de 50 % de toutes les unités de formule (XI) dans la résine d'organopolysiloxane,
éventuellement

(E) des polyorganosiloxanes, qui sont différents des polydiorganosiloxanes (A), de formule générale

$$R^7R^8_2SiO(SiR_2O)_mSiR_2R^7$$
(XIIa)

ou

$$R^8_2SiO\text{-}(SiR^8_2O)_n\text{-}SiR^8_2O$$
(XIIb)

dans lesquelles

les $R^7$ peuvent être identiques ou différents, et peuvent signifier $R^8$ ou $-OR^9$,
les $R^8$ peuvent être identiques ou différents, et signifient un radical hydrocarboné monovalent éventuellement substitué de 1 à 18 atomes C par radical,
$R^9$ signifie un atome d'hydrogène ou un radical hydrocarboné monovalent éventuellement substitué de 1 à 25 atomes C,
m signifie un nombre entier, m étant de préférence choisi de sorte que les polyorganosiloxanes de formule (XIIa) présentent à 25 °C et 101,425 kPa une viscosité de 10 à 1 000 000 mPas,
n signifie un nombre entier, n étant de préférence choisi de sorte que les polyorganosiloxanes de formule (XIIb) présentent à 25 °C et 101,425 kPa une viscosité de 2 à 15 mPas,
à condition que les polyorganosiloxanes de formule (XIIa) puissent également contenir de petites proportions de ramifications, de préférence d'unités T ($R^8SiO_{3/2}$) et d'unités Q ($SiO_2$),
éventuellement

(F) un composé organique insoluble dans l'eau, éventuellement
(G) des polysiloxanes modifiés par un polyéther, qui peuvent être linéaires ou ramifiés et contiennent au moins un groupe polyéther,
et éventuellement
(H) un catalyseur alcalin ou acide ou son produit de réaction avec un composant choisi dans le groupe des composants (A), (C) à (G) et leurs mélanges.

**6.** Procédé selon l'une quelconque des revendications 1 à 5, **caractérisé en ce que** les formulations antimousses sont utilisées sous la forme d'émulsions, les émulsions contenant des formulations antimousses selon l'une quelconque des revendications 1 à 5, des émulsifiants et de l'eau, ou sont utilisées sous la forme de poudres, les poudres contenant des formulations antimousses selon l'une quelconque des revendications 1 à 5 et des matériaux supports.

**7.** Procédé selon l'une quelconque des revendications 1 à 6, **caractérisé en ce que** les formulations antimousses sont contenues dans des détergents.

**8.** Formulations antimousses, contenant :

(A) des polydiorganosiloxanes de formule générale

$$R_3SiO(R_2SiO)_dSiR_3 \qquad (I')$$

contiennent, dans laquelle

R a la signification indiquée dans la revendication 1, et
d a la signification indiquée dans la revendication 2, et

(B) des composés d'organosilicium à fonction β-cétocarbonyle cireux de formule générale

$$(R^4O)_hR^3{}_{3-h}SiO(SiR^3{}_2O)_l(SiR^3BO)_kSiR^3{}_{3-h}(OR^4)_h \qquad (X),$$

dans laquelle B est un radical de formule générale

$$R^1CH_2\text{-}C(=O)\text{-}CHR^1\text{-}C(=O)\text{-}NH\ [\text{-}L^2\text{-}NZ]_y\text{-}L^1\text{-}(Si) \qquad (II)$$

dans laquelle

$R^1$, Z, $R^2$, $L^1$, $L^2$ et y ont la signification indiquée dans la revendication 1,
(Si)- signifie la liaison à l'atome Si, et
$R^3$, $R^4$, h, l, et k ont la signification indiquée dans la revendication 3.

**9.** Formulations antimousses selon la revendication 8, **caractérisées en ce que** les radicaux $R^1$ sont contenus dans les composés d'organosilicium à fonction β-cétocarbonyle cireux en une quantité d'au moins 32 % en poids, de préférence d'au moins 35 % en poids, de manière particulièrement préférée d'au moins 40 % en poids, et de préférence d'au plus 60 % en poids, à chaque fois par rapport au poids total des composés d'organosilicium à fonction β-cétocarbonyle cireux.

**10.** Formulations antimousses selon la revendication 8 ou 9, **caractérisées en ce qu'**elles contiennent en plus des composants (A) et (B) :

(C) des charges,
(D) des résines d'organopolysiloxane constituées d'unités de formule générale (XI) selon la revendication 5, éventuellement
(E) des polyorganosiloxanes, qui sont différents des polydiorganosiloxanes (A), de formule générale (XIIa) et (XIIb) selon la revendication 5,
éventuellement
(F) un composé organique insoluble dans l'eau, éventuellement
(G) des polysiloxanes modifiés par un polyéther, qui peuvent être linéaires ou ramifiés et contiennent au moins un groupe polyéther,

et éventuellement
(H) un catalyseur alcalin ou acide ou son produit de réaction avec un composant choisi dans le groupe des composants (A), (C) à (G) et leurs mélanges.

**11.** Détergent contenant des formulations antimousses selon la revendication 8, 9 ou 10.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3383327 A
- US 3560401 A
- EP 578424 A2
- EP 1075863 A
- EP 1075864 A
- US 7619043 B2
- US 20090137446 A1
- EP 266863 A1
- EP 1118655 A1
- US 7632890 B2
- DE 102006044839 A1
- WO 2007060113 A2
- US 8114950 B2
- EP 1076073 A1
- EP 887097 A
- EP 1060778 A